# EUROPEAN PATENT SPECIFICATION

(11) **EP 0 485 316 B1**
(45) Date of publication and mention of the grant of the patent: **09.08.1995**
(21) Application number: 91500122.6
(22) Date of filing: 04.11.1991
(51) Int. Cl.: A47B 31/00, A47J 39/02

(54) **Rack for holding plates bearing foodstuffs**
Gestell zum Halten von Speisen tragenden Tellern
Rayonnage pour assiettes portant des aliments

(30) Priority: 05.11.1990 ES 9002983
(43) Date of publication of application: 13.05.1992
(73) Proprietor: Pepio Peradejordi, Rosa, E-08470 Vallgorguina (Barcelona) (ES)
(72) Inventor: Pepio Peradejordi, Rosa, E-08470 Vallgorguina (Barcelona) (ES)
(74) Representative: Pastells Teixido, Manuel

(56) References cited:
- EP-A- 0 373 127
- CH-A- 597 749
- DE-A- 2 613 163
- FR-A- 2 414 320

## Description

This invention relates to a rack for holding plates bearing foodstuffs.

In hotels, restaurants, hospitals, clinics, barracks, and suchlike establishments where meals are cooked for many people, problems are generally encountered in finding space to lay out the plates in order to place the food on them for subsequent serving in the dining hall.

For this purpose large tables several metres long are needed, these occupying a great deal of space that is then unavailable for use at other times.

A further problem arises in carrying these plates to the dining-hall tables, this being currently done by hand by the waiters themselves; in order to economize on journeys from the kitchen to the dining hall, they load up several plates at a time, piling them up even along their arms, with the consequent risk of dropping some and the poor impession made on the customer on seeing other plates resting on top of the food on his or her plate.

Racks have been conceived to prevent these drawbacks, the racks holding a large number of plates while keeping them separate, and occupying less than one square metre; the racks furthermore allow all the plates with the food thereon to be transported to the dining hall.

To this end the structure of these racks consists generally of a base upon which there are mounted upright support rods provided with the radial and swivelling individual plate-holders; these are mounted one above the other, with a pre-established distance between plates that can be increased by swivelling the holders sideways away from each other.

Advantageously the base will be fitted with wheels, some or all of them being self-orienting, to facilitate moving the rack, the base might consist of a fork-section structure allowing the rack, laden with plates and food, to be positioned in a refrigerating or heating chamber, in order to be able to cook and prepare the food days in advance for later reheating, where appropriate, before being served at table.

An example of this kind of rack is disclosed in the German Patent DE-A-2 613 163.

The object of the present invention consists of improving this kind of rack upon designing a new structure whereto the upright support rods carrying the plate-holders are independent with respect to the supporting general rack to which they are joined and where said plate-holders have some means for fixing them at their selected radial position.

This object is achieved by a rack according to claim 1. These and other feaures may be more clearly appreciated from the detailed description that follows, to aid the understanding of which two sheets of drawings have been appended.

In the drawings:

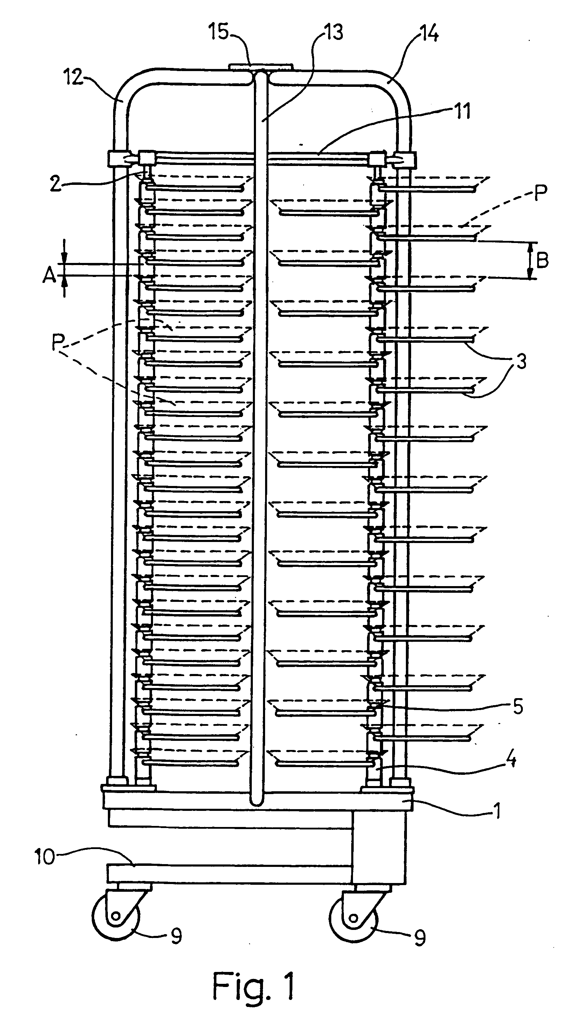

Figure 1 shows an elevation side-view of this rack for holding plates,
figure 2 shows a plan view of this rack, partly in section, and
figure 3 illustrates a detailed view of the means used for fixing the plate holders in position.

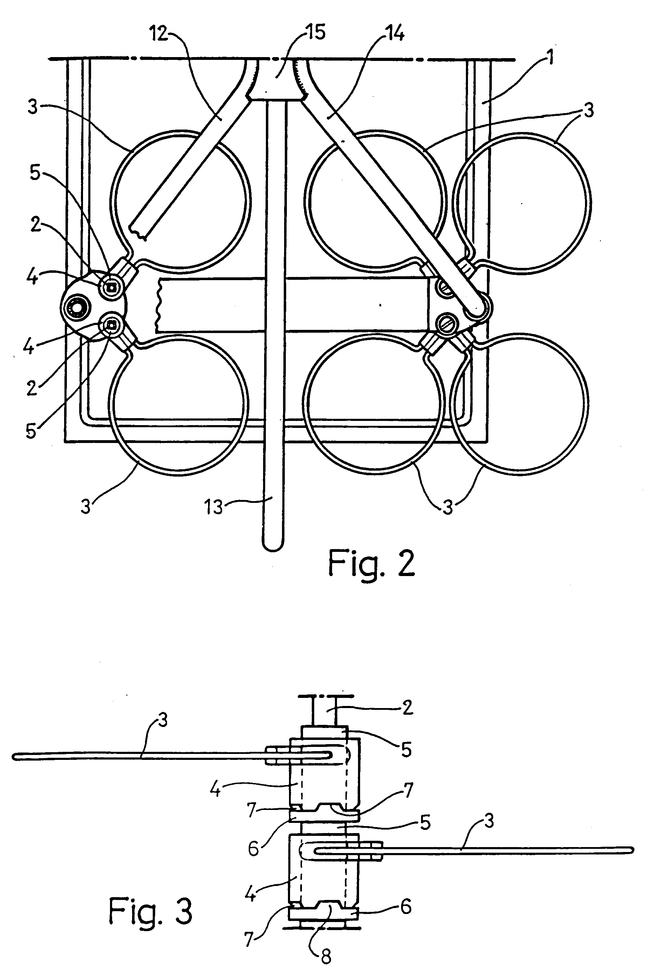

This rack comprises a rectangular base 1, from near the outside edges of which rise four pairs of straight square-section supporting rods 2. To these supports there are attached at regular intervals the ring-shaped individual holders 3 for the plates P, the attachment being, peripherally to their plane, via small sleeves 4 whose axis is perpendicular to that plane, these being rotatably mounted on, bushes 5 that are flanged at the bottom 6, and which themselves are mounted onto the vertical support rods 2 (Fig. 3).

This mounting of the holders 3 fixes a pre-established distance A between the plates P so that the food on one plate does not come into contact with the plate above it, a distance that may be, for example, around 5 cm.

Furthermore, this assembly allows the holders 3 to be moved radially by partially swivelling the sleeves 4 on the fixed bushes 5, thus achieving alternation in the vertical stacking of the plates and obtaining a greater separation in the vertical distance B between them, which may range from 7 to 8.5 cm, it thus being possible to pile the food higher on the plates.

To fix the radial positioning of the holders 3, around the lower edge of the sleeves 4 there are trapezial recesses 7 into which engages selectively a protrusion 8 of the same shape provided on the flanges of the bushes 5 (Fig. 3).

The base 1 is equipped with wheels 9 which are advantgeously self-orienting, thereby facilitating the progress of the rack from the kitchen to the dining hall.

This base has the form of a horizontal fork 10 which facilitates placing the rack with its plates and its food inside a refrigerator or a heating chamber, and thus dishes prepared over previous days may be served hot when they are required.

The vertical support rods 2 of one side are joined from above, with those on the other side, by cross-pieces 11, and they are supported by frame elements 12, 13, and 14, arranged in an inverted U-shape, and attached underneath to the base 1, and above via a plate 15. The ends of the frame's vertical support rods 13 rise above the base 1 to facilitate grasping the rack for pushing or pulling it to its destination.

In the case shown, the rack can hold two hundred plates, though by increasing its height and broadening the base a little the number of plates can be very much greater.

## Claims

1. A rack for holding plates bearing food, comprising a base (1) upon which vertical supports (2) are mounted, on which the individual holders (3) for the plates (P) are mounted, one above the other, determining a preestablished distance there between, characterized in that the vertical supports (2) are mounted at their upper end to frame elements (12, 13, 14) of a separate supporting frame, the frame elements being fitted to the base and joined at the top (15) to form an inverted U-shape, one of said frames (13) being positioned such that its vertical length projects laterally from the base (1) to facilitate handling the frame for its conveyance.

2. A rack for holding plates bearing food, according to claim 1, wherein each individual holder (3) is radially attached to a sleeve (4) which is rotatably mounted on a bush (5), the bush being mounted on the vertical support rod (2) and comprising a lower flange (6) which supports said sleeve (4), said lower flange exhibiting a V-shaped tooth (8) which can engage a recess (7) in the lower edge of the sleeve (4) in order to fix the radial position of the holder (3).

## Patentansprüche

1. Gestell zur Halterung von Tellern mit Speisen, welches eine Grundplatte (1) beinhaltet, auf welcher senkrechte Stangen (2) aufgebaut sind, auf welchen die Einzelträger (3) für die Teller (P) übereinander angeordnet sind, so dass unter denselben ein zuvor festgelegter Abstand eingehalten wird, dadurch gekennzeichnet, dass die senkrechten Stangen (2) an ihrem oberen Ende in Rahmenelementen (12, 13, 14) eines separaten Tragrahmens eingebaut sind, wobei die Rahmenelemente auf der Grundplatte montiert und oben (15) miteinander verbunden sind, um einen Rahmen in umgekehrter U-Form auszubilden, wobei einer dieser Rahmenelemente (13) so gestaltet ist, dass seine seitlichen senkrechten Abschnitte über die Grundplatte (1) hervorstehen, um den Rahmen zwecks dessen Verschiebung leichter anpacken zu können.

2. Rahmen zur Halterung von Tellern für Speisen, gemäss Patentanspruch 1, in welchem jedes einzelne Tragelement (3) radial an einer Buchse (4) befestigt ist, welche sich ihrerseits um eine Buchse (5) drehen kann, von der senkrechten Stange (2) geführt wird und an ihrem unteren Ende mit einem Flansch (6) ausgestattet ist, welcher die genannte Buchse (4) stützt, welcher untere Flansch einen trapezförmigen Zahn (8) aufweist, welcher in die entsprechende Aussparung (7) des unteren Randes der Buchse (4) eingreift, um die radiale Stellung des Trägers (3) festzulegen.

## Revendications

1. Rayonnage pour assiettes portant des aliments, comportant une base (1) sur laquelle sont montés les pieds droits (2), sur lesquels sont montés en super-position les supports individuels (3) pour les assiettes (P), ce qui crée une distance préfixée entre celles-ci, caracterisée par le fait que les pieds droits (2) sont montés par leur extrémité supérieure aux éléments du bâti (12, 13, 14) d'un bâti de soutien séparé, ces éléments du bâti étant montés à la base et unis à la partie supérieure (15) pour former un U renversé, dont l'une des parties (13) présente des tronçons verticaux qui dépassent latéralement de la base (1) afin de pouvoir saisir plus facilement le bâti lorsqu'on le transporte.

2. Rayonnage pour assiettes portant des aliments, selon la revendication 1, dans lequel chaque support individuel (3) est monté de façon radiale sur un manchon (4) qui à son tour est monté de façon rotative à une frette (5), cette frette est montée sur la tige des pieds droits (2) et comporte une collerette inférieure (6) qui soutient le manchon (4), cette fraise inférieure présente une dent trapézoïdale (8) qui s'emboîte dans la denture (7)sur le bord inférieur du manchon (4), afin de bloquer le support (3) dans sa position radiale.
